# EUROPÄISCHE PATENTSCHRIFT

(11) **EP 0 366 903 B1**
(45) Veröffentlichungstag und Bekanntmachung des Hinweises auf die Patenterteilung: **06.04.1994**
(21) Anmeldenummer: 89116420.4
(22) Anmeldetag: 06.09.1989
(51) Int. Cl.: B01D 29/46

(54) **Filterdüse mit ringförmigen Filterlamellen**
Filter spray head with ring-shaped filter segments
Buse filtrante comportant des segments annulaires

(30) Priorität: 02.11.1988 CH 4072/88
(43) Veröffentlichungstag der Anmeldung: 09.05.1990
(73) Patentinhaber: Furrer, Walter, CH-8700 Küsnacht (CH)
(72) Erfinder: Brulhart, Paul, CH-8400 Winterthur (CH)
(74) Vertreter: Troesch, Hans Alfred

(56) Entgegenhaltungen:
- AU-A- 52 363
- CH-A- 201 278
- DE-B- 1 046 574

## Beschreibung

Die vorliegende Erfindung betrifft eine Filterdüse mit ringförmigen Filterlamellen.

Für die Versorgung der Bevölkerung mit Trink- und Industriewasser sowie für die Nachreinigung von Abwasser werden immer mehr Wasseraufbereitungsanlagen eingesetzt. Ihre Aufgabe ist die Abtrennung von Schwebestoffen aus Rohwasser. Diese Aufbereitungsanlagen, sog. Schnellfilter, bestehen meistens aus einem oder mehreren offenen Filterbecken oder aus Behältern bei geschlossenen Filtern. Die Filterdüsen sind im Zwischenboden eingebaut. Diese Filterdüsen haben einerseits die Aufgabe, beim Filtrationsvorgang das Filtermedium zurückzubehalten und das Wasser durchfliessen zu lassen. Anderseits muss beim Rückspülvorgang das Filtermedium mittels eines Gegenstroms von Spülwasser und oft Spülluft gereinigt werden. Als Filtermedium dient normalerweise feingekörnter Sand.

Zu diesem Zweck werden die Zwischenböden mit einer grossen Anzahl dieser Filterdüsen ausgerüstet. Diese ermöglichen auf der ganzen Filterfläche eine gute Verteilung des zu filtrierenden Wassers oder des Spülwassers bzw. der Spülluft. Diese Filterdüsen sind an sich schon viele Jahre bekannt. Sie werden in den verschiedensten Arten gebaut und erfüllen mehr oder weniger ihre Aufgabe. In jüngster Zeit hat sich die Zusammensetzung des Filtermaterials bezüglich Qualität und/oder Körnung oft verändert.

Als Folge davon mussten die minderen Rohwasserqualitäten und die höheren Ansprüche an das Filtrat mit erhöhten Spülparametern, insbesondere erhöhten Spülgeschwindigkeiten, ausgeglichen werden. Damit verbunden sind Schwierigkeiten bei den herkömmlichen Filterdüsen, welche nicht für diese neuen, erhöhten Anforderungen vorgesehen sind.

Eine bekannte Erscheinung ist die Verstopfung bzw. Kolmatierung der Filterdüsen infolge Festsitzens von Fremdkörpern oder Ablagerungen innerhalb der Filterdüse selber. Dies hat eine Verminderung des Wasserdurchflusses, aber auch eine Verschlechterung des Spülvorganges infolge höheren Eigendruckverlustes in der Filterdüse zur Folge - und somit wird eine Aenderung des Arbeitspunktes der Spülpumpe und/oder des Spülgebläses hervorgerufen. Die aufgrund des Widerstandes nicht verstopfter Düsen ausgelegten Spülmaschinen ergeben nicht mehr den vorgesehenen Durchfluss und daher keine gute Reinigungswirkung des Spülmediums. Die Qualität des Filtrates wird dadurch negativ beeinflusst. Mit den zur Zeit oft angewendeten höheren Spüldrücken erfüllen zahlreiche herkömmliche Filterdüsen ihre Aufgabe nur noch teilweise. In krassen Fällen müssen die Filterdüsen von Zeit zu Zeit mit grossem Aufwand ausgebaut und gereinigt werden. Eine bekannte Art von Filterdüsen mit aufgestockten Lamellen, mit Distanznocken und horizontalen Schlitzen brachte eine Verbesserung. In diesen Filterdüsen erfolgt die Strömung in die eine oder andere Richtung durch die Zwischenräume der aufgestockten Lamellen. Diese Zwischenräume sind grösser als die Schlitze selber, so dass durch die Geschwindigkeitsverminderung eine Ablagerung von Stoffen möglich ist. Diese Stoffe sind meistens Partikel, die während der Spülung durch die höheren Geschwindigkeiten des Spülwassers im unteren Teil der Filtriermasse aufgewirbelt werden.

Die CH-A- 201 278 offenbart eine Filterdüse mit einer Anzahl übereinanderliegender, schalenförmiger Elemente unter einem Deckel. Diese Elemente weisen schräg nach unten gerichtete Schalenränder und an der Oberseite schief und gebogen verlaufende, durch Stege voneinander getrennte und sich über einen Teil des Randumfanges erstreckende Kanäle auf.

Die übereinanderliegenden Elemente sind nur in der Mitte durch ein gemeinsames Ablaufrohr verbunden, so, dass die Strömung zwischen den strömungsmässig voneinander getrennten Elementen nur durch einen gegenseitigen Zwischenraum erfolgt. Da diese Elemente ohne Oeffnungen ausgebildet sind, ist es nicht möglich, dass die Flüssigkeit in axialer Richtung von einem Element zum andern fliesst. Daher sind auch die Abscheidungswirkungen dieser Filterdüsen ungenügend.

Eine weitere Ausführung von Filterdüsen ist aus der DE-A- 1 046 574 bekannt geworden. Bei dieser Filterdüse sind Spaltfilterelemente in der Form von auf beiden Seiten mit Rillen versehenen Ringscheiben vorgesehen, welche block- oder kerzenförmig zusammensetzbar sind. Diese Ringscheiben sind koaxial übereinander angeordnet, so dass in deren Inneren ein koaxialer Hohlzylinder entsteht, in welchen nach Durchströmen der Rillen der Ringscheiben die Flüssigkeit im wesentlichen axial abfliesst, wie dies in den Abflussrohren von Filterdüsen bekannt ist. Auch hier ist keine Richtungsänderung der zu reinigenden Flüssigkeit durch gegeneinander umfänglich versetzte Oeffnungen vorgesehen, welche die Flüssigkeit zwingen, eine völlig unregelmässige, vor allem auch gelenkt axiale und dreidimensionale Bewegung auszuführen. Auch diese Spaltfilterelemente führen das Wasser bzw. die zu reinigende Flüssigkeit nur in sekantaler Richtung durch ihre umfänglichen Rillen, in senkrechter Richtung zur Abflussrichtung, so dass die durch die Rillen geflossene und einer Filterung unterzogene Flüssigkeit anschliessend keinem weiteren Spaltfilterelement zuströmt, welches auf diese Flüssigkeit eine reinigende Wirkung ausüben könnte.

Auch dieser Filteraufbau kann den heutigen Anforderungen bezüglich Filterung nicht mehr genügen.

Eine in der AU-A- 52 363/64 beschriebene Filterdüse ist mit ringförmigen Filterlamellen versehen. Diese Filterlamellen sind über einen mittigen rohrförmigen Träger gestülpt. Die Filterlamellen sind im Bereich der äusseren Ränder mit Vorsprüngen versehen, um zwischen zwei sich folgenden Ringen Durchschlussöffnungen freizuhalten. Die Ringe sind ferner so beschaffen, dass ein äusserer peripherer, sich radial nach innen erweiternder Durchflussraum entsteht, sowie ein davon getrennter innerer, sich ebenfalls radial nach innen erweiternder Durchflussraum, wobei diese Durchflussräume voneinander durch einen Einlegering getrennt sind, welcher Ring der Filterlamellensäule eine vermehrte mechanische Stabilität geben soll.

Um das radial in den äusseren Ringraum eintretende Wasser dem Innenringraum zuführen zu können, sind sowohl die Filterlamellen als auch der Zwischenring mit achsprallelen Oeffnungen versehen.

Die inneren ringförmigen Kammern sind über Längsschlitze in der Wand des mittigen rohrförmigen Trägers mit dem hohlen Innern dieses Trägers verbunden, so, dass das die innere Kammer durchfliessende Wasser vor dem zum radialen Durchfliessen des äusseren Ringraumes, dann achsparallelen Durchfliessens der achsparallelen Oeffnungen geführt, anschliessend radial in den rohrförmigen Träger einströmt. Die kleinsten filtrierenden Oeffnungen zum Einströmen des zu reinigenden Wassers sind die pheripheren äusseren Schlitze der sich folgenden Filterlamellen, während sich gegen den rohrförmigen Träger hin die Durchflussquerschnitte vergrössern, was zur Folge hat, dass diese Filterdüsen einen äusserst geringen Druckabfall aufweisen, andererseits aber den Nachteil zeigen, dass nicht filtrierte Feinstpartikelchen sich sich im Innern auf den Filterlamellen, insbesondere wegen der verzögerten Wasserdurchströmgeschwindigkeit, absetzen können.

Bei einer anderen bekannten Konstruktion (GB-A- 2 037 607) ist eine Filterdüse mit ringförmigen Filterlamellen beschrieben, wobei entsprechende Distanzhalter vorgesehen sind, um zwischen den Filterlamellen den Zutritt des Wassers zur Filterdüse zu ermöglichen.

Dabei finden an den äusseren Mantelflächen der Filterlamellen die Ausscheidungen der entsprechenden Teilchen statt. Der Innenraum zwischen den einzelnen Filterlamellen ist durch Ausnehmungen im Querschnitt vergrössert, so dass in diesem Raum eine verminderte Strömungsgeschwindigkeit gegenüber der Zuströmgeschwindigkeit herrscht, was infolge der relativ engen Bohrungen im Mittelteil, welcher eine zentrale Abflussöffnung für das Wasser mit seitlichen Bohrungen aufweist, zu einer Stauung des Wassers zwischen den Lamellen führt. Dadurch lagern sich feine, nicht abgefilterte Teilchen zwischen den Filterlamellen ab, was durch fleissiges Rückspülen den Filter vor Verstopfen bewahrt.

In einer anderen Konstruktion (US-A- 4 267 045) wird eine Filterdüse mit ringförmigen Filterlamellen beschrieben, in welcher Düse ebenfalls ein rein radiales Durchfliessen des zwischen den angrenzenden Filterlamellen vorgesehenen Freiraumes radial gegen die Mitte hin erfolgt. Dabei sorgen entsprechende Elemente für einen ständigen Richtungswechsel des noch die Feinteile enthaltenden, im übrigen aber gefilterten Wassers wie in einem Irrgarten. Dies hat den Nachteil, dass diese ständige Aenderung der Richtung des durchlaufenden Wassers mit entsprechenden Wirbelbildungen und Totwassergebieten eine Ablagerung der Feinteile begünstigt, so dass auch bei dieser Konstruktion ein fleissiges Rückspülen unbedingt nötig ist, um diese Zwischenräume zwischen den Filterlamellen vor Verstopfung und Ausfallen der Filterdüse zu bewahren.

In einer weiteren Vorveröffentlichung (US-A- 3 784 015) ist eine Filterdüse mit parallel zueinander angeordneten Filterlamellen versehen, welche derart geformt sind, dass zwischen zwei sich folgenden Lamellen eine vorbestimmte laminare Strömung des zu reinigenden Wassers festgelegt wird, wobei Zentrifugalkräfte wirken, welche die Teilchen in entsprechend dafür vorgesehenen Taschen ablagern und in übrigen die Durchflussquerschnitte für das Wasser freihalten. Eine derartige Konstruktion verlangt aber ein Entleeren der entsprechenden Taschen, was auf einfache Art nicht möglich ist. Deshalb ist ein solches Filter für die Reinigung von grossen Wassermengen ungeeignet.

Die einer Ablagerung von Feststoffen ausgesetzten Flächen, insbesondere die Stege der Filterringe, sind äusserst klein dimensioniert.

Die vorliegende Erfindung bezweckt die Schaffung einer Filterdüse, deren Verstopfungsgefahr geringer ist als diejenige bekannter Düsen und welche daher einen regelmässigeren Betrieb sicherstellt sowie weniger häufige Reinigungen verlangt.

Eine derartige Filterdüse zeichnet sich aus durch einen der Ansprüche.

Der Erfindungsgegenstand wird anschliessend beispielsweise anhand einer Zeichnung erläutert.

Es zeigen:
- Fig. 1: einen Axialschnitt durch eine im Zwischenboden eines Filterbeckens oder Filterbehälters eingebaute Filterdüse zum Abfiltrieren bzw. Zurückhalten des Filtriermediums, z.B. Sand,

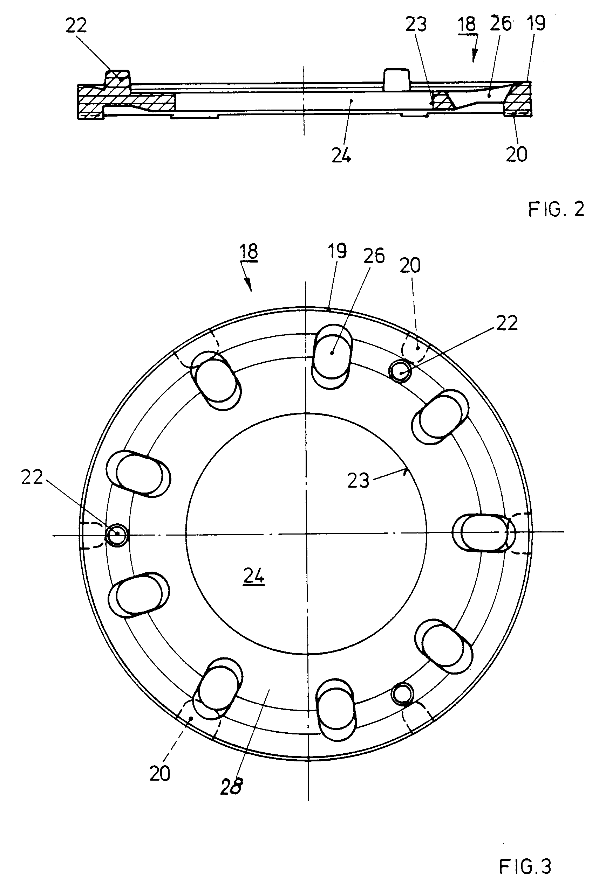

- Fig. 2: einen Axialschnitt durch eine Lamelle einer Filterdüse,
- Fig. 3: eine Aufsicht auf die Lamelle gemäss Fig. 2,
- Fig. 4: einen vergrösserten Ausschnitt aus dem Kopfteil einer Filterdüse analog Fig. 1, mit montierten Lamellen,
- Fig. 5: einen Ausschnitt aus der Lamelle gemäss Fig. 3,
- Fig. 6: den Kopfteil eines rohrförmigen Filterdüsenträgers,
- Fig. 7: eine Aufsicht auf zwei übereinander liegende Filterlamellen in unterschiedlicher Winkellage,
- Fig. 8: eine Seitenansicht der zwei Filterlamellen gemäss Fig. 7,
- Fig. 9: einen Schnitt nach Schnittlinie IX - IX durch die eine der Filterlamellen nach Fig. 7.

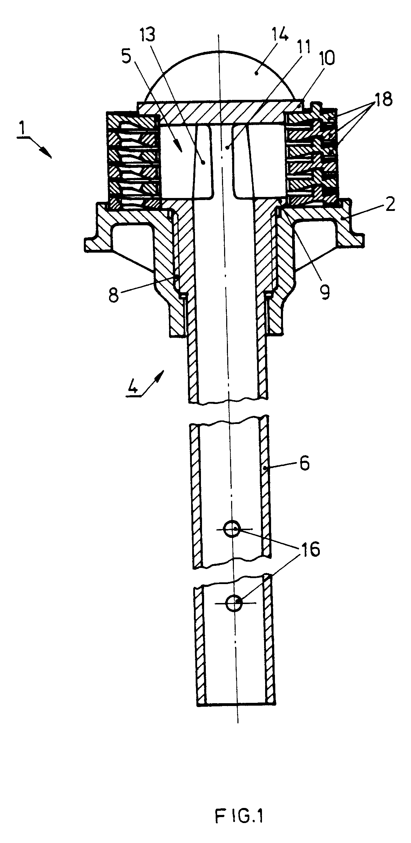

Fig. 1 zeigt eine montierte Filterdüse 1, welche in einer in einem Zwischenboden einbetonierten Fassung 2 eingeschraubt ist. Die Filterdüse 1 umfasst einen Träger 4 mit einem Kopfteil 5 und einem Abflussrohr 6. Die Oeffnungen 13 liegen im unteren Teil des Kopfteiles so, dass das Wasser in die Lamellen zwangsläufig in axialer Richtung fliessen muss. Der Träger 4 ist einteilig und besteht vorzugsweise aus Kunststoff. Unterhalb des Kopfteils 5 befindet sich ein Gewinde 8, das zum Festhalten der Filterdüse 1 in der Fassung 2 dient und ein leichtes Einsetzen der Filterdüse 1 von oben her ermöglicht. Die Filterdüse 1 liegt mit ihrem Auflageflansch 9 auf der oberen Abschlussfläche der Fassung 2 auf, während ein oberer Abschlussflansch 10 des Kopfteiles 5 dem Abspannen von zur Filterdüse 1 gehörenden Lamellen 18 dient. In Fig. 1 sind die Lamellen 18 mit sich deckenden axialen Durchgängen gezeichnet. In der Praxis sind diese gegeneinander versetzt, so dass dem Wasser eine Geschwindigkeitskomponente in Umfangsrichtung erteilt wird. Zwischen dem Auflageflansch 9 und dem oberen Abschlussflansch 10 befinden sich vier kreuzförmig angeordnete Rippen 11, deren Zwischenräume 13 dem Zufliessen des gereinigten Wassers in das Abflussrohr 6 dienen. Den oberen Abschluss des Kopfteiles 5 bildet ein kreuzförmiger Fingergriff 14, welcher das Ein- und Ausschrauben der Filterdüse 1 erleichtert. Das Abflussrohr 6 ist in seinem unteren Teil mit zwei Rückspülöffnungen 16 versehen, in welche Rückspül-Druckwasser bzw. Rückspül-Druckluft eingeleitet werden kann.

Es kann vorteilhaft sein, die oberen Teile der Zwischenräume 13 zu verengen oder ganz zu verschliessen, um das in den oberen Lamellen eintretende Wasser nur teilweise oder gar nicht ins Abflussrohr 6 fliessen zu lassen, wie dies die Fix. 6 mit den Oeffnungen 30 zeigt. Der freie Querschnitt kann z.B. proportional zur jeweiligen Lamellenzahl nach unten hin zunehmen.

Der filtrierende Teil der Filterdüse 1 setzt sich aus mehreren Lamellen 18 zusammen, deren äusserer Rand als Filtrierrand 19 ausgebildet ist. Auf dem Umfang verteilte Abstandnocken 16, welche axial über den Filtrierrand 19 vorstehen, legen den Abstand zweier benachbarter Lamellen 18 fest. Sie bestimmen damit die Breite des Filtrierringspaltes 27, welcher dem zu reinigenden Wasser den engsten Querschnitt bietet und daher die Filterwirkung zum Zurückhalten des Filtriermediums, z.B. des Sandes, ausübt. Ueber dem Umfang, radial nach innen versetzt, sind Zentrierzapfen 22 verteilt, welche ein radiales Verrutschen der aufeinanderliegenden Lamellen 18 verhütet. Es kann der Innenrand 23, welcher die Innenöffnung 24 umrandet, bezüglich des Innenkanals 28, zwischen dem äusseren Filtrierrand 19 und dem Innenrand 23 liegend, etwas erhöht sein.

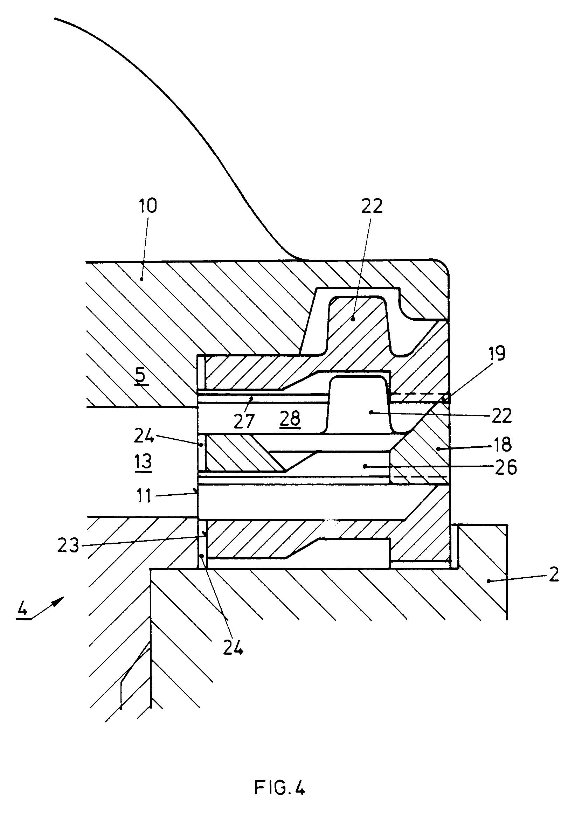

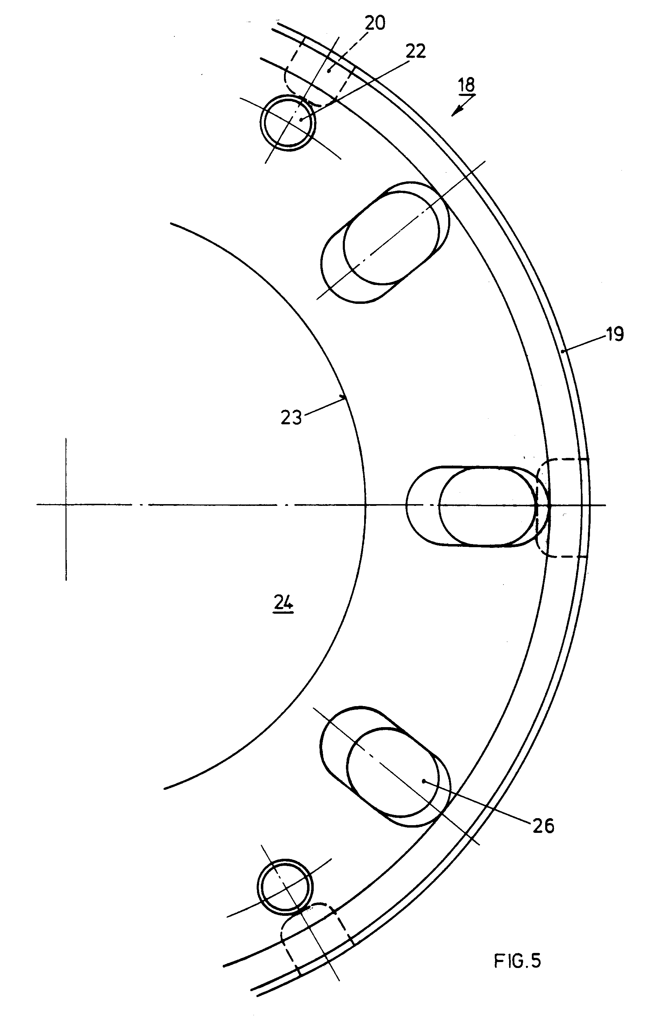

Von grosser Wichtigkeit ist die Tatsache, dass zwischen den Rändern 19 und 23, wie insbesondere die Fig. 4 und 5 zeigen, Durchgänge 26 angeordnet sind, welche erlauben, das gereinigte, durch den Filterringspalt 27 durchgeflossene Wasser mindestens zum Teil in Längsrichtung der Filterdüse 1 fliessen zu lassen, wodurch die Gefahr der Ablagerung, insbesondere von Schwebestoffen, verringert wird. Je nach Ausbildung des Innenrandes 23 und der Zwischenräume 13 zwischen den Rippen 11 gelangt auch mehr oder weniger Wasser in das Abflussrohr 6.

Was die Durchgänge 26 betrifft, sind diese normalerweise nach unten, d.h. in Strömungsrichtung, verengt, um auch hier eine Gefahr des Ansetzens von Fremdstoffen durch eine beschleunigte Strömung zu bannen. Es ist dabei auch möglich, durch zusätzliche Einbauten in den Innenkanälen 28 den Weg des Wassers zu lenken, diesem z.B. vom Filtrierringspalt 27 her gegen den Eintritt der Durchgänge hin einen Drall zu vermitteln. Diese Durchgänge könnten auch gleichbleibenden Querschnitt aufweisen, von irgend einer vernünftigen Form.

Es ist ferner möglich, durch entsprechende Ausbildung der Ober- und Unterseiten der Lamellen den Innenkanal 28 querschnittsmässig zu bemessen, dass im wesentlichen eine gleichmässige Geschwindigkeit des abströmenden Wassers sichergestellt wird.

Beim Zusammenbau der Filterdüse 1 wird, z.B. durch entsprechende Anschläge, mit Hilfe der Zentrierzapfen 22 erreicht, dass die Durchgänge 26 umfangmässig von einer Lamelle 18 zur nächsten versetzt sind, um die Strömung des Wassers beim Durchfliessen der Lamellen durch Umlenkungen entsprechend turbulent zu halten und damit das Reinigen der Lamellen auf natürliche Art sicherzustellen.

Es wird mithin erreicht, dass sich die Strömung nicht nur horizontal zwischen dem äusseren Rand und dem Ablaufrohr, sondern auch vertikal und mit tangentialen Komponenten ausbildet.

Eine Ablagerung von Stoffen auf dem Weg des Wassers bzw. Spülwassers und Spülluft kann in den Strömungskanälen der Lamellen nicht mehr stattfinden. Zudem ergibt sich, nachdem die Durchgänge von einer Lamelle zur anderen willkürlich liegen, durch die Strömung von einem Durchgang zum nächsten eine gewisse Reinigungswirkung der allenfalls abgelagerten Schwebestoffe.

Die Eigenschaften der Filterdüse bleiben dadurch zeitlich praktisch konstant, da eine Aenderung der Betriebsbedingungen der bestehenden Filteranlagen nicht mehr eintritt.

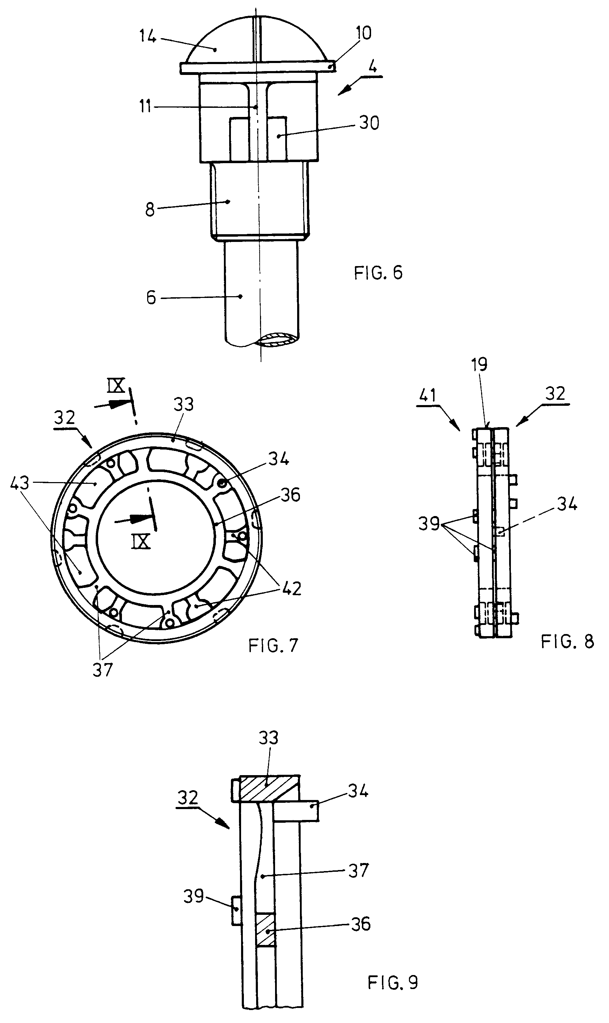

Fig. 6 zeigt den Kopfteil eines rohrförmigen Trägers 4 für eine Filterdüse, bei welchem die zentralen Oeffnungen sich nur über einen Teil seiner Länge erstrecken und durch die entsprechenden Oeffnungen 30 gegeben sind. Auf diese Weise wird in den vom Wasser durchflossenen Räumen zwischen den Filterlamellen, bedingt durch den relativ engen Querschnitt dieser Oeffnungen 30, ein gewisser Stau und damit eine Gleichmässigkeit in den Wassergeschwindigkeiten nach dem Eintritt in die Filterdüse erreicht.

Die Fig. 7 bis 9 zeigen eine weitere Ausgestaltung von Filterlamellen. Die eine Filterlamelle 32 weist einen Randring 33 sowie Zentrierzapfen 34 auf. Ihr Innenring 36 ist über Stege 37 mit dem Randring 33 verbunden. Distanznocken 39 legen den Durchflussspalt zwischen zwei aufeinander liegenden Filterlamellen fest, wie dies in Fig. 8 angedeutet ist. Dabei sind bei einer zweiten Filterlamelle 41 deren Stege 42 gegenüber den Stegen 37 der Filterlamelle 32 umfänglich versetzt. Dies bewirkt, dass das eintretende Wasser teilweise radial durch die entsprechenden Kanäle zwischen den beiden Filterlamellen 32 und 41 strömt, während ein Teil in axialer Richtung durch die umfänglichen Oeffnungen 43 abströmt. Dies hat, wegen der Winkelversetzung der beiden Filterlamellen 32 und 41 - welche Versetzung sich automatisch beim Montieren ergibt - eine Tangentialkomponente des Wassers zur Folge, welche allfällige Deponien von Feinmaterial auf den einzelnen Stegen wegschwemmt und damit eine ständige Selbstreinigung der Düse bzw. der Filterlamellen bewirkt.

Die im übrigen radialen Strömungsgeschwindigkeiten sind durch entsprechende Dimensionierung der Querschnitte so gewählt, dass auch hier allfällig abgelagerte Teilchen durch die Strömung wiederum entfernt werden. Eine solche Ablagerung kann sich dann ergeben, wenn die Beaufschlagung des Filters mit Wasser eine gewisse Wassermenge unterschreitet und damit die vorgesehenen Geschwindigkeiten in den Filterdüsen nicht mehr gewährleistet sind.

## Patentansprüche

1. Filterdüse mit ringförmigen, von aussen beaufschlagten Filterlamellen (18), welche sowohl mit radialen Strömungswegen (28) als auch mit die Filterlamellen (18) durchsetzenden, der Führung von Filterflüssigkeit dienenden, axial durchströmten Durchgängen (26) versehen sind, dadurch gekennzeichnet, dass die Durchgänge (26) von sich folgenden Filterlamellen (18) gegeneinander umfänglich versetzt sind, um dem durch diese Durchgänge strömenden Wasser eine Geschwindigkeitskomponente in Umfangsrichtung zu erteilen.

2. Filterdüse nach Anspruch 1, dadurch gekennzeichnet, dass die radialen Strömungswege (28) mit nach je einem Durchgang weisenden Lenkern ausgerüstet sind, um dem einströmenden Wasser gelenkt zwangsläufig zusätzlichen Drall und eine Hinführung zum entsprechenden Durchgang (26) zu vermitteln.

3. Filterdüse nach Anspruch 1, dadurch gekennzeichnet, dass die Durchgänge (26) einer Filterlamelle (18) als sich in Strömungsrichtung des gefilterten Wassers vorzugsweise verengende Durchgänge (26) ausgebildet sind, die vorzugsweise gleichmässig auf der Lamelle (18) verteilt sind.

4. Filterdüse nach Anspruch 1, dadurch gekennzeichnet, dass die Lamellen (18) Mittel, z.B. Anschläge aufweisen, welche sicherstellen, dass die Durchgänge (26) zweier benachbarter Lamellen nicht fluchten.

5. Filterdüse nach Anspruch 1, dadurch gekennzeichnet, dass die Strömungswege (28) der Filterlamellen im Strömungsquerschnitt derart dimensioniert sind, dass in ihnen ein mindestens annähernd gleichmässiger Absolutwert der Strömungsgeschwindigkeit herrscht.

## Claims

1. A filter nozzle with ring-shaped filter segments (18), which are urged from the outside and are provided with radial flow ways (28) as well as with axially flowed through passages (26) extending through said filter segments (18) and serving to guide a liquid to be filtered, characterized in that the passages (26) of successive filter segments (18) are offset peripherally with respect to one another, so as to impart a velocity component in peripheral direction to the water flowing through said passages.

2. The filter nozzle according to claim 1, characterized in that the radial flow ways (28) are provided with baffles, which are turned each towards a respective passage, so as to forceably impart an additional kinetic moment to the incoming water and feed it to the corresponding passage (26).

3. The filter nozzle according to claim 1, characterized in that the passages (26) of a filter segment (18) are formed as passages (26), which are preferably narrowing in the direction of flow of the filtered water and are preferably uniformly spaced on the segment (18).

4. The filtering nozzle according to claim 1, characterized in that the segments (18) comprise means, for example stops, ensuring that the passages (26) of two adjacent segments are not aligned.

5. The filter nozzle according to claim 1, characterized in that the flow ways (28) of the filter segments are so dimensioned in flow cross-section that an at least approximately constant absolute value of the flow velocity is prevailing therein.

## Revendications

1. Buse filtrante comportant des lamelles filtrantes annulaires (18) sollicitées de l'extérieur, qui sont pourvues non seulement de voies d'écoulement radiales (28), mais aussi de passages (26) qui traversent les lamelles filtrantes (18), qui servent au guidage du liquide filtré et qui sont traversés axialement, caractérisée en ce que les passages (26) de lamelles filtrantes successives (18) sont décalés les uns par rapport aux autres sur la périphérie afin de donner à l'eau s'écoulant par ces passages une composante de vitesse dans le sens périphérique.

2. Buse filtrante selon la revendication 1, caractérisée en ce que les voies d'écoulement radiales (28) sont équipées de chicanes orientées vers un passage correspondant, afin de donner à l'eau entrant un moment cinétique supplémentaire forcé et de l'amener vers le passage (26) correspondant.

3. Buse filtrante selon la revendication 1, caractérisée en ce que les passages (26) d'une lamelle filtrante (18) sont conçus comme des passages (26) allant de préférence en diminuant dans le sens d'écoulement de l'eau filtrée, qui sont répartis de préférence de façon régulière sur la lamelle (18).

4. Buse filtrante selon la revendication 1, caractérisée en ce que les lamelles (18) comportent des moyens, par exemple des butées, grâce auxquels on est sûr que les passages (26) de deux lamelles voisines ne sont pas dans l'alignement l'un de l'autre.

5. Buse filtrante selon la revendication 1, caractérisée en ce que les voies d'écoulement (28) des lamelles filtrantes ont une section transversale d'écoulement dimensionnée de telle sorte que la vitesse d'écoulement offre, dans ces voies d'écoulement (28), une valeur absolue au moins approximativement régulière.
